# EUROPEAN PATENT APPLICATION

(11) **EP 4 846 900 A1**
(43) Date of publication of application: **02.12.2026**
(21) Application number: 26174153.2
(22) Date of filing: 23.04.2026
(51) Int. Cl.: A47K 5/12, F16F 1/02, B05B 11/10

(54) **RECYCLABLE SPRING FOR A FLUID DISPENSER**

(30) Priority: 28.05.2025 US 202563813137 P
(71) Applicant: OP-Hygiene IP GmbH, 4704 Niederbipp (CH)
(72) Inventor: Ophardt, Heiner, 4422 Arisdorf (CH); Jones, Andrew, St. Anns, Ontario, L0R 1Y0 (CA)
(74) Representative: Grünecker Patent- und Rechtsanwälte PartG mbB

(57) **Abstract**

A spring with an outer cylindrical member that surrounds and defines a hollow internal cavity. The spring body has a plane of symmetry that contains a central axis and divides the spring body into a first side and a second side, the first side being a mirror image of the second side. The outer cylindrical member comprises a stack of interconnected sinusoidal ring sections with side openings defined therebetween. The sinusoidal ring sections are stacked in an alternating pattern of a first orientation and a second orientation.

## Description

### Related Application

This application claims priority to the 28 May 2025 filing date of U.S. Provisional Patent Application Serial No. 63/813,137, which is incorporated herein by reference.

### Field of the Invention

This invention relates to hand cleaning fluid dispensers, and more particularly to dispensers that contain a spring.

### Background of the Invention

Hand cleaning fluid dispensers typically include a pump that has moveable parts, such as a piston that moves relative to a piston chamber when the pump is activated. Dispensers also often include a biasing mechanism or spring that returns the piston to its home position after the pump has been activated.

Often a metallic coil spring is used, although it is also known to use springs made from plastic materials. Typically, plastic springs are constructed from materials having low compression set values. These tend to be rigid materials, such as polyoxymethylene or nylon, or engineering grade thermoplastic elastomers.

The inventors have appreciated a disadvantage of previously known plastic springs is that the materials used are typically not compatible for recycling with the rest of the pump construction (normally made from polypropylene, high density polyethylene, low density polyethylene, or other polyolefins) and/or they are too expensive to generally suit use in disposable/recyclable single use pumps.

### Summary of the Invention

To at least partially overcome some of the disadvantages of previously known systems, devices and methods, in one aspect the present invention provides a spring having a resiliently deformable spring body that extends from a first spring end to a second spring end. The spring body has a hollow cylindrical shape with an outer cylindrical member that surrounds and defines a hollow internal cavity. The outer cylindrical member extends about a central axis from the first spring end to the second spring end, and the hollow internal cavity extends from a first end opening at the first spring end to a second end opening at the second spring end. The spring body has a plane of symmetry that contains the central axis and divides the spring body into a first side and a second side, the first side being a mirror image of the second side.

The outer cylindrical member comprises a stack of interconnected sinusoidal ring sections with side openings defined therebetween. Each of the sinusoidal ring sections comprise a ring body having a sinusoidal shape when viewed from the first side. Each of the sinusoidal ring sections are arranged in either a first orientation or a second orientation. The sinusoidal ring sections are stacked in an alternating pattern of the first orientation and the second orientation.

The sinusoidal ring sections that are in the first orientation, when viewed from the first side with the first spring end positioned vertically above the second spring end, extend, from left to right, from an outer left trough to an inner left peak to an inner right trough to an outer right peak. The sinusoidal ring sections that are in the second orientation, when viewed from the first side with the first spring end positioned vertically above the second spring end, extend, from left to right, from an outer left peak to an inner left trough to an inner right peak to an outer right trough.

For each sinusoidal ring section that is in the first orientation and is spaced from the first spring end and the second spring end, the outer left trough is interconnected with the outer left peak of an underlying one of the sinusoidal ring sections in the second orientation, the inner left peak is interconnected with the inner left trough of an overlying one of the sinusoidal ring sections in the second orientation, the inner right trough is interconnected with the inner right peak of the underlying one of the sinusoidal ring sections in the second orientation, and the outer right peak is interconnected with the outer right trough of the overlying one of the sinusoidal ring sections in the second orientation.

For each sinusoidal ring section that is in the second orientation and is spaced from the first spring end and the second spring end, the outer left peak is interconnected with the outer left trough of an overlying one of the sinusoidal ring sections in the first orientation, the inner left trough is interconnected with the inner left peak of an underlying one of the sinusoidal ring sections in the first orientation, the inner right peak is interconnected with the inner right trough of the overlying one of the sinusoidal ring sections in the first orientation, and the outer right trough is interconnected with the outer right peak of the underlying one of the sinusoidal ring sections in the first orientation.

The spring body is compressible from an unbiased condition, in which the first spring end is spaced a first distance from the second spring end along the central axis, to a compressed condition, in which the first spring end is spaced a second distance from the second spring end along the central axis, the first distance being greater than the second distance. The spring body is biased to return from the compressed condition towards the unbiased condition.

The inventors have appreciated that a spring having the aforementioned construction can advantageously be made from a suitable recyclable material, such as polypropylene, high density polyethylene, or low density polyethylene, and still provide a sufficient compression set resistance to be used in place of a metal coil spring in a disposable/recyclable single use fluid dispenser pump.

In a further aspect, the present invention provides a fluid dispenser having a piston chamber forming body, a piston element, and a spring that extends from a first spring end to a second spring end, the first spring end arranged for engagement with the piston chamber forming body and the second spring end arranged for engagement with the piston element.

The spring is compressible from an unbiased condition, in which the first spring end is spaced a first distance from the second spring end, to a pre-loaded condition, in which the first spring end is spaced a second distance from the second spring end, the first distance being greater than the second distance. The spring is also compressible from the pre-loaded condition to a compressed condition, in which the first spring end is spaced a third distance from the second spring end, the second distance being greater than the third distance. The spring is biased to return from the compressed condition towards the unbiased condition.

The fluid dispenser comprises a locking mechanism that is configured to hold the piston chamber forming body and the piston element in an unloaded state. When the piston chamber forming body and the piston element are in the unloaded state, the spring is in the unbiased condition.

The locking mechanism comprises a stop member that prevents the piston chamber forming body from moving relative to the piston element from the unloaded state to a pre-loaded state, unless a threshold unlocking force is applied. When the piston chamber forming body and the piston element are in the pre-loaded state, the spring is in the pre-loaded condition.

When the piston chamber forming body and the piston element are in the pre-loaded state, the piston element is moveable along a piston axis relative to the piston chamber forming body from the pre-loaded state to a retracted state upon application of an activation force. Movement of the piston chamber forming body and the piston element from the pre-loaded state to the retracted state compresses the spring from the pre-loaded condition to the compressed condition.

The spring is configured to return the piston chamber forming body and the piston element from the retracted state to the pre-loaded state upon removal of the activation force. The fluid dispenser is configured to dispense fluid upon movement of the piston element relative to the piston chamber forming body between the pre-loaded state and the retracted state.

The inventors have appreciated that a fluid dispenser having the aforementioned locking mechanism can advantageously hold the piston chamber forming body and the piston element in an unloaded state in which the spring is in an unbiased condition. This allows the spring to be maintained in the unbiased condition when the fluid dispenser is not in use, for example when the dispenser is being stored and/or transported. This can be helpful for maintaining the proper functioning of the spring, particularly if the spring is made from a material such as polypropylene that is prone to compression set.

Further aspects of the invention include:
A spring, which optionally incorporates one or more features of any one or more of the preceding and/or following aspects, comprising: a resiliently deformable spring body that extends from a first spring end to a second spring end; wherein the spring body has a hollow cylindrical shape with an outer cylindrical member that surrounds and defines a hollow internal cavity; wherein the outer cylindrical member extends about a central axis from the first spring end to the second spring end; wherein the hollow internal cavity extends from a first end opening at the first spring end to a second end opening at the second spring end; wherein the spring body has a plane of symmetry that contains the central axis and divides the spring body into a first side and a second side, the first side being a mirror image of the second side; wherein the outer cylindrical member comprises a stack of interconnected sinusoidal ring sections with side openings defined therebetween; wherein each of the sinusoidal ring sections have a sinusoidal shape when viewed from the first side; wherein each of the sinusoidal ring sections are arranged in either a first orientation or a second orientation; wherein the sinusoidal ring sections are stacked in an alternating pattern of the first orientation and the second orientation; wherein the sinusoidal ring sections that are in the first orientation, when viewed from the first side with the first spring end positioned vertically above the second spring end, extend, from left to right, from an outer left trough to an inner left peak to an inner right trough to an outer right peak; wherein the sinusoidal ring sections that are in the second orientation, when viewed from the first side with the first spring end positioned vertically above the second spring end, extend, from left to right, from an outer left peak to an inner left trough to an inner right peak to an outer right trough; wherein, for each sinusoidal ring section that is in the first orientation and is spaced from the first spring end and the second spring end, the outer left trough is interconnected with the outer left peak of an underlying one of the sinusoidal ring sections in the second orientation, the inner left peak is interconnected with the inner left trough of an overlying one of the sinusoidal ring sections in the second orientation, the inner right trough is interconnected with the inner right peak of the underlying one of the sinusoidal ring sections in the second orientation, and the outer right peak is interconnected with the outer right trough of the overlying one of the sinusoidal ring sections in the second orientation; wherein, for each sinusoidal ring section that is in the second orientation and is spaced from the first spring end and the second spring end, the outer left peak is interconnected with the outer left trough of an overlying one of the sinusoidal ring sections in the first orientation, the inner left trough is interconnected with the inner left peak of an underlying one of the sinusoidal ring sections in the first orientation, the inner right peak is interconnected with the inner right trough of the overlying one of the sinusoidal ring sections in the first orientation, and the outer right trough is interconnected with the outer right peak of the underlying one of the sinusoidal ring sections in the first orientation; wherein the spring body is compressible from an unbiased condition, in which the first spring end is spaced a first distance from the second spring end along the central axis, to a compressed condition, in which the first spring end is spaced a second distance from the second spring end along the central axis, the first distance being greater than the second distance; and wherein the spring body is biased to return from the compressed condition towards the unbiased condition.

A spring, which optionally incorporates one or more features of any one or more of the preceding and/or following aspects, wherein the spring body is formed from plastic.

A spring, which optionally incorporates one or more features of any one or more of the preceding and/or following aspects, wherein the spring body is formed from polypropylene.

A spring, which optionally incorporates one or more features of any one or more of the preceding and/or following aspects, wherein the spring body is formed from polyethylene.

A spring, which optionally incorporates one or more features of any one or more of the preceding and/or following aspects, wherein the spring body is formed from high density polyethylene.

A spring, which optionally incorporates one or more features of any one or more of the preceding and/or following aspects, wherein the spring body is formed from low density polyethylene.

A spring, which optionally incorporates one or more features of any one or more of the preceding and/or following aspects, wherein the outer cylindrical member further comprises a first terminal ring at the first spring end and a second terminal ring at the second spring end; wherein the first terminal ring defines the first end opening; and wherein the second terminal ring defines the second end opening.

A spring, which optionally incorporates one or more features of any one or more of the preceding and/or following aspects, wherein the first terminal ring and the second terminal ring, when viewed from the first side with the first spring end positioned vertically above the second spring end, extend horizontally from left to right.

A spring, which optionally incorporates one or more features of any one or more of the preceding and/or following aspects, wherein, when viewed from the first side with the first spring end positioned vertically above the second spring end, the first terminal ring is interconnected with an uppermost one of the sinusoidal ring sections, and the second terminal ring is interconnected with a lowermost one of the sinusoidal ring sections.

A spring, which optionally incorporates one or more features of any one or more of the preceding and/or following aspects, wherein, when viewed from the first side with the first spring end positioned vertically above the second spring end, the uppermost one of the sinusoidal ring sections is in the first orientation, and the first terminal ring is interconnected with the inner left peak and the outer right peak of the uppermost one of the sinusoidal ring sections.

A spring, which optionally incorporates one or more features of any one or more of the preceding and/or following aspects, wherein, when viewed from the first side with the first spring end positioned vertically above the second spring end, the uppermost one of the sinusoidal ring sections is in the second orientation, and the first terminal ring is interconnected with the outer left peak and the inner right peak of the uppermost one of the sinusoidal ring sections.

A spring, which optionally incorporates one or more features of any one or more of the preceding and/or following aspects, wherein, when viewed from the first side with the first spring end positioned vertically above the second spring end, the lowermost one of the sinusoidal ring sections is in the first orientation, and the second terminal ring is interconnected with the outer left trough and the inner right trough of the lowermost one of the sinusoidal ring sections.

A spring, which optionally incorporates one or more features of any one or more of the preceding and/or following aspects, wherein, when viewed from the first side with the first spring end positioned vertically above the second spring end, the lowermost one of the sinusoidal ring sections is in the second orientation, and the second terminal ring is interconnected with the inner left trough and the outer right trough of the lowermost one of the sinusoidal ring sections.

A spring, which optionally incorporates one or more features of any one or more of the preceding and/or following aspects, wherein, when the spring body is in the unbiased condition, the sinusoidal ring sections have a first amplitude; wherein, when the spring body is in the compressed condition, the sinusoidal ring sections have a second amplitude; and wherein the first amplitude is greater than the second amplitude.

A fluid dispenser, which optionally incorporates one or more features of any one or more of the preceding and/or following aspects, comprising: a piston chamber forming body; a piston element; and a spring that extends from a first spring end to a second spring end, the first spring end arranged for engagement with the piston chamber forming body and the second spring end arranged for engagement with the piston element; wherein the spring is compressible from an unbiased condition, in which the first spring end is spaced a first distance from the second spring end, to a pre-loaded condition, in which the first spring end is spaced a second distance from the second spring end, the first distance being greater than the second distance; wherein the spring is also compressible from the pre-loaded condition to a compressed condition, in which the first spring end is spaced a third distance from the second spring end, the second distance being greater than the third distance; wherein the spring is biased to return from the compressed condition towards the unbiased condition; wherein the fluid dispenser comprises a locking mechanism that is configured to hold the piston chamber forming body and the piston element in an unloaded state; wherein, when the piston chamber forming body and the piston element are in the unloaded state, the spring is in the unbiased condition; wherein the locking mechanism comprises a stop member that prevents the piston chamber forming body from moving relative to the piston element from the unloaded state to a pre-loaded state, unless a threshold unlocking force is applied; wherein, when the piston chamber forming body and the piston element are in the pre-loaded state, the spring is in the pre-loaded condition; wherein, when the piston chamber forming body and the piston element are in the pre-loaded state, the piston element is moveable along a piston axis relative to the piston chamber forming body from the pre-loaded state to a retracted state upon application of an activation force; wherein movement of the piston chamber forming body and the piston element from the pre-loaded state to the retracted state compresses the spring from the pre-loaded condition to the compressed condition; wherein the spring is configured to return the piston chamber forming body and the piston element from the retracted state to the pre-loaded state upon removal of the activation force; and wherein the fluid dispenser is configured to dispense fluid upon movement of the piston element relative to the piston chamber forming body between the pre-loaded state and the retracted state.

A fluid dispenser, which optionally incorporates one or more features of any one or more of the preceding and/or following aspects, wherein the piston chamber forming body comprises an outer wall and a locking projection that extends outwardly from the outer wall; wherein the piston element comprises an outer sheath that at least partially surrounds the outer wall; wherein the outer sheath defines a locking channel that receives the locking projection; wherein the locking channel comprises an unloaded zone, a pre-loaded zone, and an intermediate zone located between the unloaded zone and the pre-loaded zone; wherein, when the locking projection is in the unloaded zone, the piston chamber forming body and the piston element are in the unloaded state, and the spring is in the unbiased condition; wherein the stop member is located in the intermediate zone, and prevents the locking projection from moving from the unloaded zone to the pre-loaded zone unless the threshold unlocking force is applied; wherein the pre-loaded zone comprises a pre-load surface; wherein the pre-load surface is configured to engage with the locking projection when the locking projection is in the pre-loaded zone and the activation force is absent; wherein, when the locking projection is engaged with the pre-load surface, the piston chamber forming body and the piston element are in the pre-loaded state, and the spring is in the pre-loaded condition; wherein the pre-loaded zone further comprises an activation passage; and wherein, when the piston element is moved along the piston axis relative to the piston chamber forming body from the pre-loaded state to the retracted state, the locking projection moves away from the pre-load surface through the activation passage.

A fluid dispenser, which optionally incorporates one or more features of any one or more of the preceding and/or following aspects, wherein the stop member comprises a deformable projection of the outer sheath that at least partially obstructs the locking channel when in an unbiased position; wherein the deformable projection is moveable from the unbiased position to a biased position upon engagement with the locking projection and application of the threshold unlocking force; wherein the locking projection is moveable past the deformable projection from the unloaded zone to the pre-loaded zone when the deformable projection is in the biased position.

A fluid dispenser, which optionally incorporates one or more features of any one or more of the preceding and/or following aspects, wherein the locking projection comprises a cam surface that engages with the deformable projection and moves the deformable projection from the unbiased position to the biased position upon application of the threshold unlocking force.

A fluid dispenser, which optionally incorporates one or more features of any one or more of the preceding and/or following aspects, wherein the locking projection is moved from the unloaded zone to the pre-loaded zone by rotating the piston element about the piston axis relative to the piston chamber forming body.

A fluid dispenser, which optionally incorporates one or more features of any one or more of the preceding and/or following aspects, wherein the intermediate zone comprises a transition surface that engages with the locking projection as the locking projection moves from the intermediate zone to the pre-loaded zone, the transition surface comprising a ramped surface that moves the piston element axially towards the pre-loaded state as the locking projection moves laterally towards the pre-loaded zone.

A fluid dispenser, which optionally incorporates one or more features of any one or more of the preceding and/or following aspects, wherein the piston chamber forming body comprises an outer wall; wherein the piston element comprises a sealing body that engages with an inner surface of the outer wall; wherein the inner surface of the outer wall comprises an unloaded zone, a pre-loaded zone, and an intermediate zone located between the unloaded zone and the pre-loaded zone; wherein, when the sealing body is in the unloaded zone, the piston chamber forming body and the piston element are in the unloaded state, and the spring is in the unbiased condition; wherein the stop member is located in the intermediate zone, and prevents the sealing body from moving from the unloaded zone to the pre-loaded zone unless the threshold unlocking force is applied; wherein the stop member comprises a pre-load surface; wherein the pre-load surface is configured to engage with the sealing body when the sealing body is in the pre-loaded zone and the activation force is absent; wherein, when the sealing body is engaged with the pre-load surface, the piston chamber forming body and the piston element are in the pre-loaded state, and the spring is in the pre-loaded condition; and wherein, when the piston element is moved along the piston axis relative to the piston chamber forming body from the pre-loaded state to the retracted state, the sealing body moves away from the pre-load surface along the inner surface of the outer wall.

A fluid dispenser, which optionally incorporates one or more features of any one or more of the preceding and/or following aspects, wherein the stop member comprises a locking ring that extends radially inwardly from the inner surface of the outer wall.

A fluid dispenser, which optionally incorporates one or more features of any one or more of the preceding and/or following aspects, wherein the sealing body is deformable from a first position to a second position; wherein the stop member prevents the sealing body from moving from the unloaded zone to the pre-loaded zone while in the first position; wherein, when the sealing body is in the unloaded zone, the sealing body is moveable from the first position to the second position upon engagement with the stop member and application of the threshold unlocking force; and wherein the sealing body is moveable past the stop member from the unloaded zone to the pre-loaded zone when the sealing body is in the second position.

A fluid dispenser, which optionally incorporates one or more features of any one or more of the preceding and/or following aspects, wherein the sealing body comprises a sloped surface that engages with the stop member for moving the sealing body from the first position to the second position upon application of the threshold unlocking force.

A fluid dispenser, which optionally incorporates one or more features of any one or more of the preceding and/or following aspects, wherein the sealing body is moved from the unloaded zone to the pre-loaded zone by moving the piston element along the piston axis relative to the piston chamber forming body from the unloaded state to the pre-loaded state.

A fluid dispenser, which optionally incorporates one or more features of any one or more of the preceding and/or following aspects, wherein the spring comprises the spring of any one or more of the preceding aspects.

A fluid dispenser, which optionally incorporates one or more features of any one or more of the preceding and/or following aspects, comprising: a piston chamber forming body; a piston element; and a spring that extends from a first spring end to a second spring end, the first spring end arranged for engagement with the piston chamber forming body and the second spring end arranged for engagement with the piston element; wherein the spring is compressible from an unbiased condition, in which the first spring end is spaced a first distance from the second spring end, to a pre-loaded condition, in which the first spring end is spaced a second distance from the second spring end, the first distance being greater than the second distance; wherein the spring is also compressible from the pre-loaded condition to a compressed condition, in which the first spring end is spaced a third distance from the second spring end, the second distance being greater than the third distance; wherein the spring is biased to return from the compressed condition towards the unbiased condition; wherein the fluid dispenser is configured to allow the piston chamber forming body and the piston element to be arranged in an unloaded state; wherein, when the piston chamber forming body and the piston element are in the unloaded state, the spring is in the unbiased condition; wherein the fluid dispenser is configured to allow the piston chamber forming body and the piston element to move from the unloaded state to a pre-loaded state; wherein, when the piston chamber forming body and the piston element are in the pre-loaded state, the spring is in the pre-loaded condition; wherein, when the piston chamber forming body and the piston element are in the pre-loaded state, the piston element is moveable along a piston axis relative to the piston chamber forming body from the pre-loaded state to a retracted state upon application of an activation force; wherein movement of the piston chamber forming body and the piston element from the pre-loaded state to the retracted state compresses the spring from the pre-loaded condition to the compressed condition; wherein the spring is configured to return the piston chamber forming body and the piston element from the retracted state to the pre-loaded state upon removal of the activation force; wherein the fluid dispenser is configured to dispense fluid upon movement of the piston element relative to the piston chamber forming body between the pre-loaded state and the retracted state; and wherein the spring comprises the spring in accordance with any one or more of the preceding aspects.

A fluid dispenser, which optionally incorporates one or more features of any one or more of the preceding and/or following aspects, comprising: a piston chamber forming body; a piston element; and a spring that extends from a first spring end to a second spring end, the first spring end arranged for engagement with the piston chamber forming body and the second spring end arranged for engagement with the piston element; wherein the spring is compressible from an unbiased condition, in which the first spring end is spaced a first distance from the second spring end, to a compressed condition, in which the first spring end is spaced a second distance from the second spring end, the first distance being greater than the second distance; wherein the piston element is moveable along a piston axis relative to the piston chamber forming body from an extended state to a retracted state upon application of an activation force; wherein movement of the piston chamber forming body and the piston element from the extended state to the retracted state compresses the spring; wherein the spring is configured to return the piston chamber forming body and the piston element from the retracted state to the extended state upon removal of the activation force; wherein the fluid dispenser is configured to dispense fluid upon movement of the piston element relative to the piston chamber forming body between the extended state and the retracted state; and wherein the spring comprises the spring in accordance with any one or more of the preceding aspects.

A method, which optionally incorporates one or more features of any one or more of the preceding and/or following aspects, comprising: providing the fluid dispenser in accordance with any one or more of the preceding aspects; and placing the piston chamber forming body and the piston element in the unloaded state.

A method, which optionally incorporates one or more features of any one or more of the preceding and/or following aspects, further comprising: storing the fluid dispenser with the piston chamber forming body and the piston element in the unloaded state.

A method, which optionally incorporates one or more features of any one or more of the preceding and/or following aspects, further comprising: transporting the fluid dispenser with the piston chamber forming body and the piston element in the unloaded state.

A method, which optionally incorporates one or more features of any one or more of the preceding and/or following aspects, further comprising: moving the piston chamber forming body and the piston element from the unloaded state to the pre-loaded state.

A method, which optionally incorporates one or more features of any one or more of the preceding and/or following aspects, further comprising: moving the piston element relative to the piston chamber forming body between the pre-loaded state and the retracted state to dispense the fluid.

A spring, which optionally incorporates one or more features of any one or more of the preceding and/or following aspects, wherein the spring is for biasing a piston element towards an extended position relative to a piston chamber forming body in a fluid pump.

### Brief Description of the Drawings

Further aspects and advantages of the invention will appear from the following description taken together with the accompanying drawings, in which:
Figure 1 is a front view of a fluid pump in accordance with a first embodiment of the present invention, with a piston element and a piston chamber forming body of the pump shown in an unloaded state;
Figure 2 is a perspective view of the piston chamber forming body shown in Figure 1;
Figure 3 is a bottom perspective view of the piston chamber forming body shown in Figure 1;
Figure 4 is a perspective view of the piston element shown in Figure 1;
Figure 5 is a top perspective view of the piston element shown in Figure 1;
Figure 6 is a perspective side view of a spring of the fluid pump shown in Figure 1;
Figure 7 is a perspective front view of the spring shown in Figure 6;
Figure 8 is a side view of the spring shown in Figure 6, with the spring in an unbiased condition;
Figure 9 is a side view of a sinusoidal ring section of the spring shown in Figure 6, the sinusoidal ring section being in a first orientation;
Figure 10 is a side view of a sinusoidal ring section of the spring shown in Figure 6, the sinusoidal ring section being in a second orientation;
Figure 11 is a cross-sectional view of the fluid pump shown in Figure 1, with the piston element and the piston chamber forming body in the unloaded state and the spring in the unbiased condition;
Figure 12 is a front view of the fluid pump shown in Figure 1, with the piston element and the piston chamber forming body in a pre-loaded state;
Figure 13 is a side view of the piston element shown in Figure 1, with a stop member of the piston element shown in an unbiased position;
Figure 14 is a side view of the piston element shown in Figure 1, with the stop member shown in a biased position;
Figure 15 is cross-sectional view of the fluid pump shown in Figure 1, with the piston element and the piston chamber forming body in the pre-loaded state and the spring in a pre-loaded condition;
Figure 16 is a side view of the spring shown in Figure 6, with the spring in the pre-loaded condition;
Figure 17 is a front view of the fluid pump shown in Figure 1, with the piston element and the piston chamber forming body in a retracted state;
Figure 18 is a cross-sectional view of the fluid pump shown in Figure 1, with the piston element and the piston chamber forming body in the retracted state and the spring in a compressed condition;
Figure 19 is a side view of the spring shown in Figure 6, with the spring in the compressed condition;
Figure 20 is a front view of a fluid pump in accordance with a second embodiment of the present invention, with a piston element and a piston chamber forming body of the pump shown in an unloaded state;
Figure 21 is a perspective cross-sectional view of the piston chamber forming body shown in Figure 20;
Figure 22 is a front view of the piston element shown in Figure 20, with a sealing body of the piston element in a first position;
Figure 23 is a cross-sectional view of the fluid pump shown in Figure 20, with the piston element and the piston chamber forming body in the unloaded state;
Figure 24 is a detailed cross-sectional view showing the location of the sealing body when the piston element and the piston chamber forming body are in the unloaded state;
Figure 25 is a front view of the piston element shown in Figure 20, with the sealing body in a second position;
Figure 26 is a cross-sectional view of the fluid pump shown in Figure 20, with the piston element and the piston chamber forming body in a pre-loaded state;
Figure 27 is a detailed cross-sectional view showing the location of the sealing body when the piston element and the piston chamber forming body are in the pre-loaded state; and
Figure 28 is a cross-sectional view of the fluid pump shown in Figure 20, with the piston element and the piston chamber forming body in a retracted state.

### Detailed Description of the Drawings

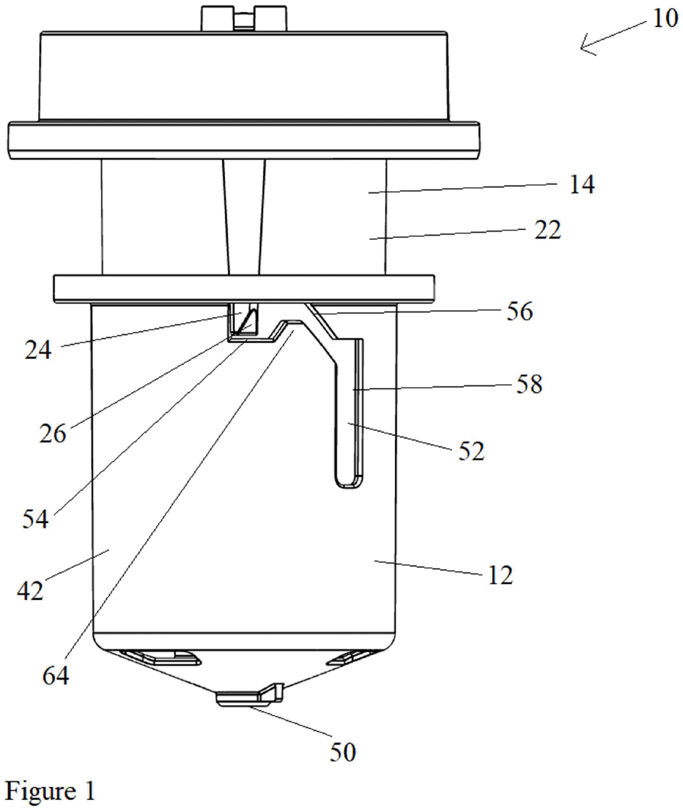

Figure 1 shows a fluid pump 10 in accordance with a first embodiment of the present invention. The fluid pump 10 is preferably a replaceable component for a fluid dispenser housing, not shown, for dispensing hand cleaning fluid such as soap or hand sanitizer. The fluid pump 10 could optionally be adapted for use with any suitable fluid dispenser housing, such as those described in United States Patent No. 8,245,877 to Ophardt, issued August 21, 2012; United States Patent No. 8,113,388 to Ophardt et al., issued February 14, 2012; United States Patent No. 8,091,739 to Ophardt et al., issued January 10, 2012; United States Patent No. 7,748,573 to Anhuf et al., issued July 6, 2010; U.S. Patent No. 7,984,825 to Ophardt et al., issued July 26, 2011; U.S. Patent No. 8,684,236 to Ophardt, issued April 1, 2014; U.S. Patent No. 5,373,970 to Ophardt, issued December 20, 1994; U.S. Patent No. 5,836,482 to Ophardt et al., issued November 17, 1998; and U.S. Patent No. 9,682,390 to Ophardt et al., issued June 20, 2017, which are incorporated herein by reference.

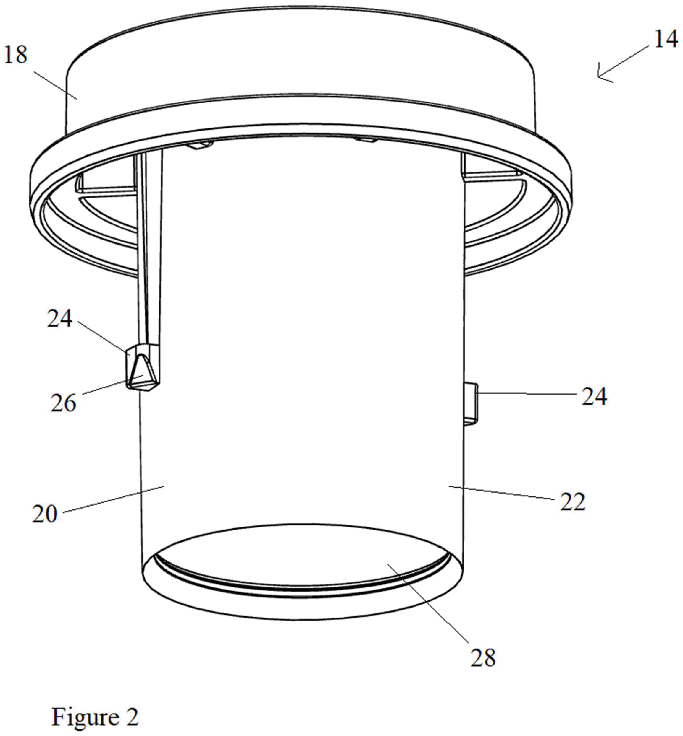

The fluid pump 10 includes a piston element 12, a piston chamber forming body 14, and a spring 16. As can be seen in Figure 2, the piston chamber forming body 14 includes a reservoir attachment portion 18 and a piston chamber defining portion 20. The reservoir attachment portion 18 is for attaching to a fluid reservoir, not shown, containing a supply of the fluid to be dispensed.

The piston chamber forming portion 20 comprises a cylindrical outer wall 22 that extends downwardly from the reservoir attachment portion 18 and defines an air cavity 32 with an open bottom end 28. Two locking projections 24 extend radially outwardly from the outer wall 22 on opposite sides of the outer wall 22. The locking projections 24 each have a chamfered cam surface 26, as can be seen on one of the locking projections in Figure 2.

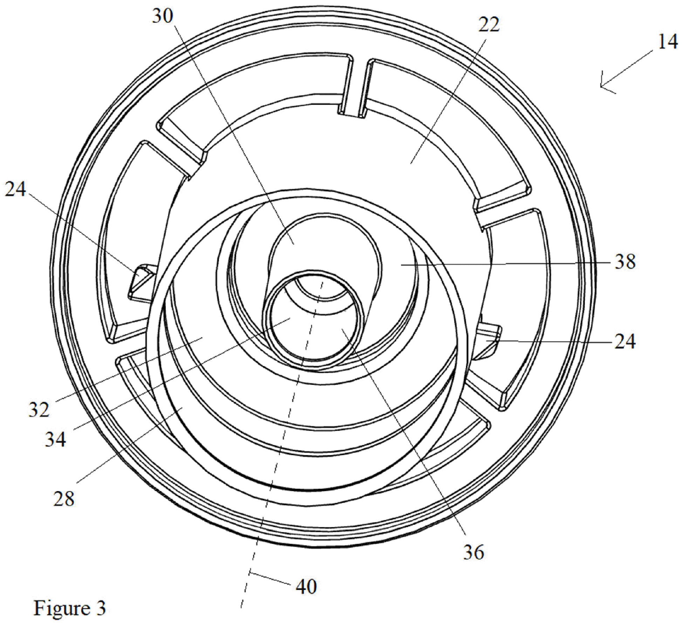

As can be seen in Figure 3, the piston chamber forming portion 20 also has a cylindrical inner wall 30 that is spaced radially inwardly from the outer wall 22. The inner wall 30 defines a liquid cavity 34 with an open lower end 36. The inner wall 30 and the outer wall 22 are both arranged concentrically about a piston axis 40.

The piston chamber forming body 14 also has a downwardly facing spring engagement surface 38 that surrounds the inner wall 30.

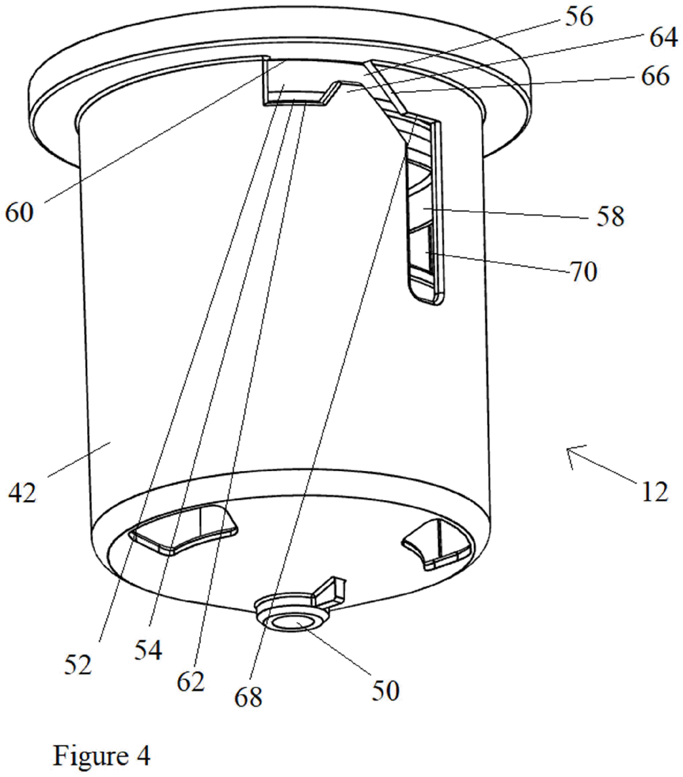

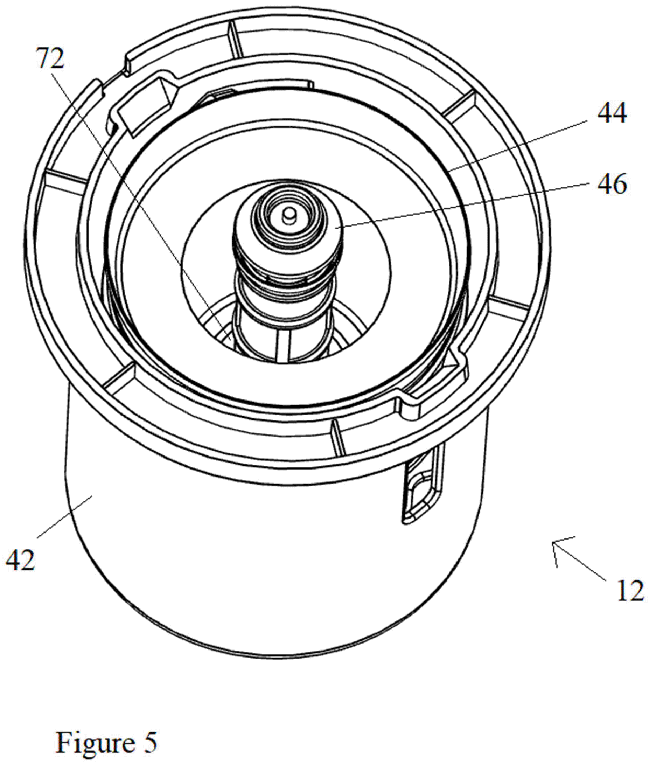

As can be seen in Figures 4, 5 and 11, the piston element 12 comprises an outer sheath 42, an air piston 44, a liquid piston 46, a foam generating chamber 48, and a discharge outlet 50. The outer sheath 42 defines two locking channels 52 for receiving the locking projections 24 of the piston chamber forming body 14. One of the locking channels 52 can be seen in Figure 4. The other locking channel 52 is identical and is located on the opposite side of the sheath 42, but is not visible in the drawings.

The locking channels 52 each have an unloaded zone 54, a pre-loaded zone 58, and an intermediate zone 56 located between the unloaded zone 54 and the pre-loaded zone 58. The unloaded zone 54 of the locking channel 52 has an upper surface 60 that is positioned near the top of the sheath 42, and an upwardly facing lock surface 62 that is spaced downwardly from the upper surface 60.

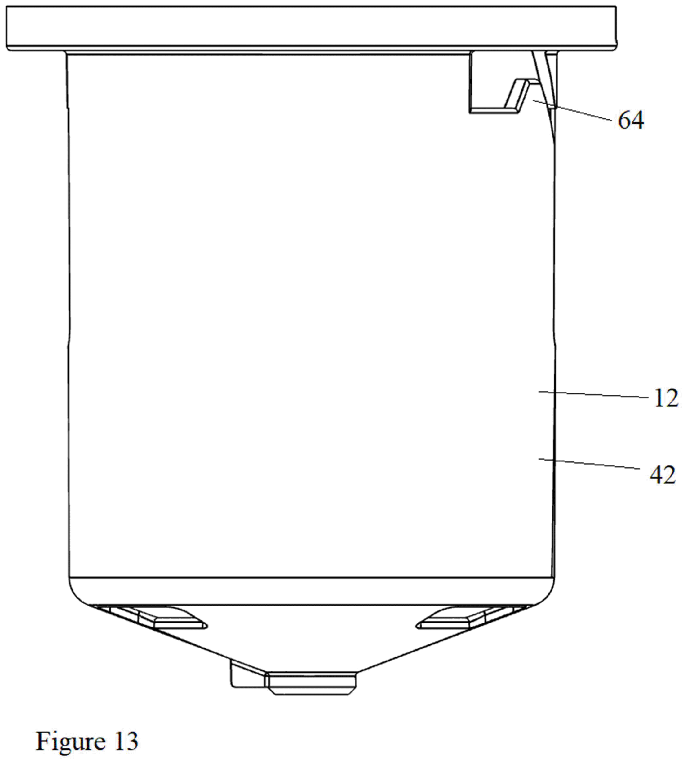

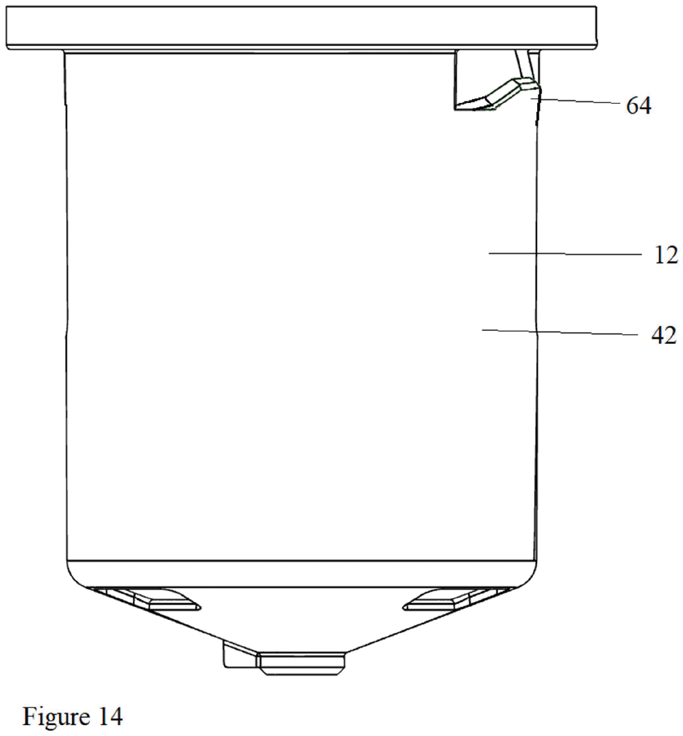

The intermediate zone 56 is positioned laterally beside the unloaded zone 54, and has a stop member 64 and a transition surface 66. The stop member 64 is a deformable projection of the outer sheath 42 that partially obstructs the locking channel 52. The stop member 64 is resiliently deformable from the unbiased position shown in Figure 13, in which the stop member 64 projects upwardly into the locking channel 52, to the biased position shown in Figure 14, in which the stop member 64 is deflected outwardly.

As can be seen in Figure 4, the transition surface 66 slopes diagonally downwards from the upper surface 60 of the unloaded zone 54.

The pre-loaded zone 58 is positioned adjacent to the intermediate zone 56, and includes a downwardly facing pre-load surface 68 and an activation passage 70 that extends downwardly away from the pre-load surface 68. The pre-load surface 68 is connected to the transition surface 66, and is positioned further downwardly relative to the top of the sheath 42 than the upper surface 60 is from the top of the sheath 42.

As can be seen in Figure 1, when the fluid pump 10 is assembled the outer sheath 42 of the piston element 12 surrounds the outer wall 22 of the piston chamber forming body 14, with the locking projections 24 extending out through the locking channels 52.

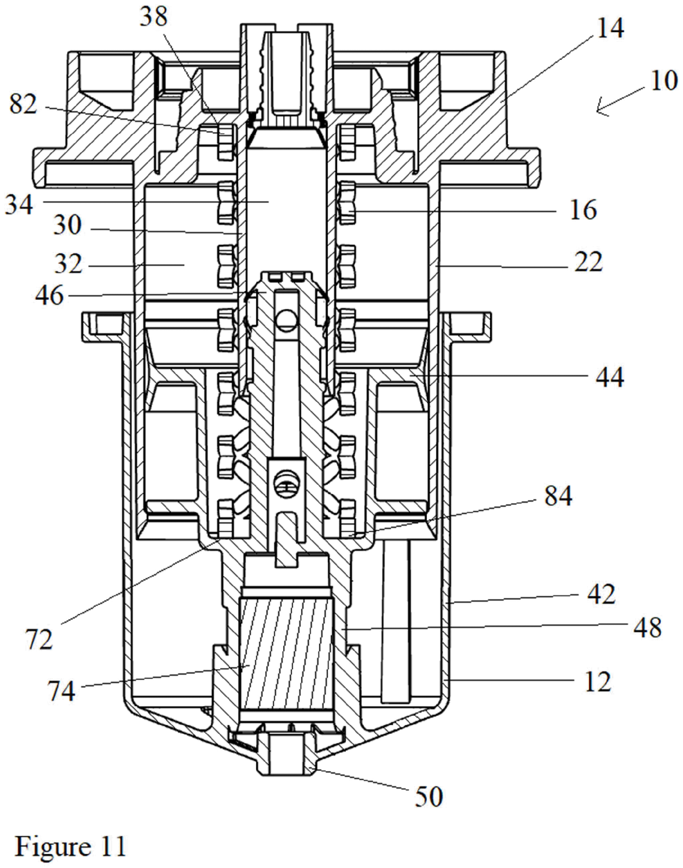

As can be seen in Figure 11, the air piston 44 is located radially inwardly from the outer sheath 42, and extends up through the open bottom end 28 of the air cavity 32, and the liquid piston 46 is located radially inwardly from the air piston 44, and extends up through the open lower end 36 of the liquid cavity 34. The piston element 12 also has an upwardly facing spring engaging surface 72 that surrounds the liquid piston 46.

The foam generating chamber 48 is positioned below the liquid piston 46, and is best shown in Figure 11. The foam generating chamber 48 carries a foam generating device 74, such as a sponge and/or a metallic, plastic or woven material mesh.

The discharge outlet 50 is positioned below the foam generating chamber 48 for discharging foam from the pump 10.

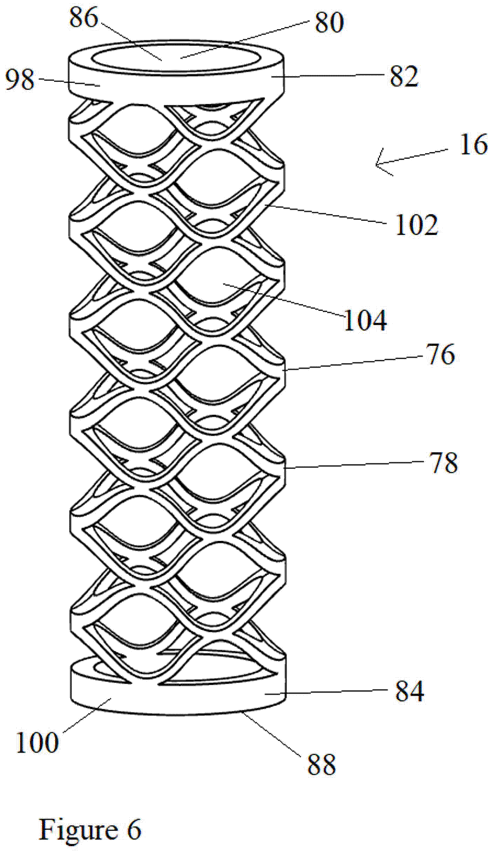

As can be seen in Figures 6 to 8, the spring 16 has a resiliently deformable spring body 76 that extends from a first spring end 82 to a second spring end 84. The spring body 76 is preferably made from a plastic such as polypropylene, polyethylene, high density polyethylene, and/or low density polyethylene. The spring body 76 has a hollow cylindrical shape with an outer cylindrical member 78 that surrounds and defines a hollow internal cavity 80. The outer cylindrical member 78 extends about a central axis 92 from the first spring end 82 to the second spring end 84. The hollow internal cavity 80 extends from a first end opening 86 at the first spring end 82 to a second end opening 88 at the second spring end 84.

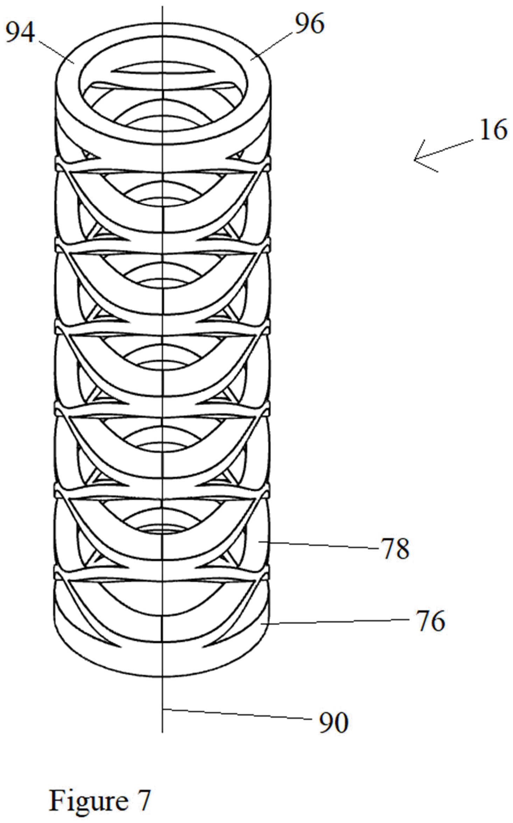

As can be seen in Figure 7, the spring body 76 has a plane of symmetry 90 that contains the central axis 92 and divides the spring body 76 into a first side 94 and a second side 96, the first side 94 being a mirror image of the second side 96.

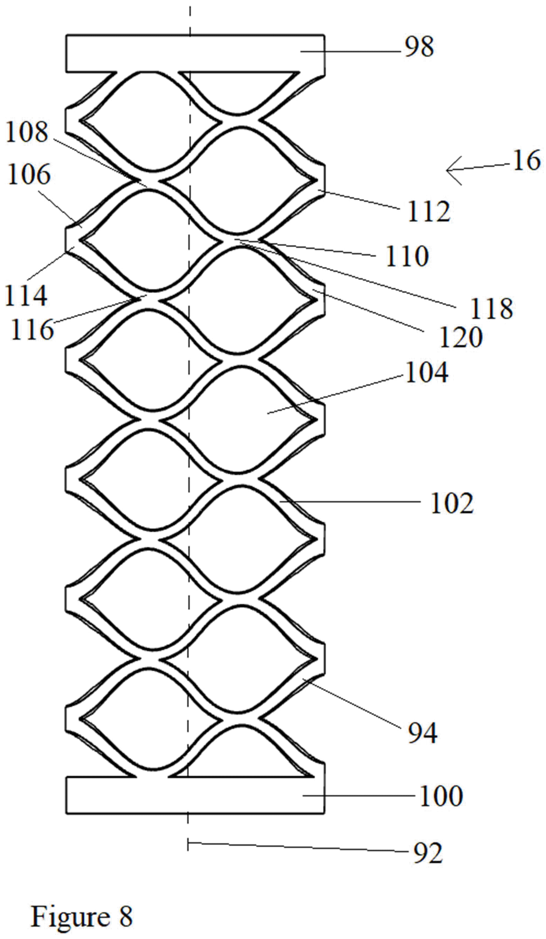

As can be seen in Figure 6, the outer cylindrical member 78 has a first terminal ring 98 at the first spring end 82 and a second terminal ring 100 at the second spring end 84, with a stack of interconnected sinusoidal ring sections 102 extending therebetween. Each of the sinusoidal ring sections 102 have a sinusoidal shape when viewed from the first side, as can be seen in Figure 8. Side openings 104 are defined between the adjacent sinusoidal ring sections 102.

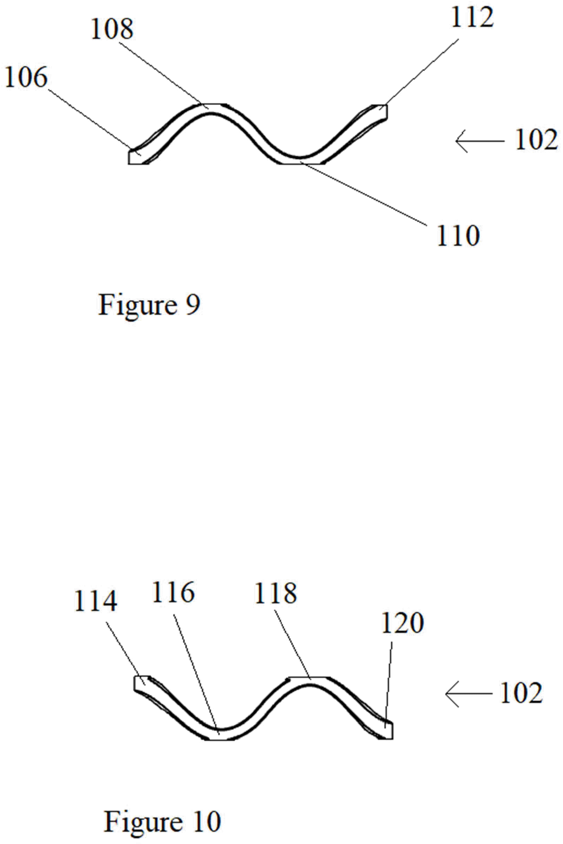

Each of the sinusoidal ring sections 102 are arranged in either a first orientation or a second orientation, and the sinusoidal ring sections 102 are stacked in an alternating pattern of the first orientation and the second orientation. A side view of a sinusoidal ring section 102 in the first orientation is shown in Figure 9, and a side view of a sinusoidal ring section 102 in the second orientation is shown in Figure 10.

As can be seen in Figure 9, the sinusoidal ring sections 102 that are in the first orientation, when viewed from the first side, extend, from left to right, from an outer left trough 106 to an inner left peak 108 to an inner right trough 110 to an outer right peak 112.

As can be seen in Figure 10, the sinusoidal ring sections 102 that are in the second orientation, when viewed from the first side, extend, from left to right, from an outer left peak 114 to an inner left trough 116 to an inner right peak 118 to an outer right trough 120.

As can be seen in Figure 8, for each sinusoidal ring section 102 that is in the first orientation and is spaced from the first terminal ring 98 and the second terminal ring 100, the outer left trough 106 is interconnected with the outer left peak 114 of an underlying one of the sinusoidal ring sections 102 in the second orientation, the inner left peak 108 is interconnected with the inner left trough 116 of an overlying one of the sinusoidal ring sections 102 in the second orientation, the inner right trough 110 is interconnected with the inner right peak 118 of the underlying one of the sinusoidal ring sections 102 in the second orientation, and the outer right peak 112 is interconnected with the outer right trough 120 of the overlying one of the sinusoidal ring sections 102 in the second orientation.

As can also be seen in Figure 8, for each sinusoidal ring section 102 that is in the second orientation and is spaced from the first terminal ring 98 and the second terminal ring 100, the outer left peak 114 is interconnected with the outer left trough 106 of an overlying one of the sinusoidal ring sections 102 in the first orientation, the inner left trough 116 is interconnected with the inner left peak 108 of an underlying one of the sinusoidal ring sections 102 in the first orientation, the inner right peak 118 is interconnected with the inner right trough 110 of the overlying one of the sinusoidal ring sections 102 in the first orientation, and the outer right trough 120 is interconnected with the outer right peak 112 of the underlying one of the sinusoidal ring sections 102 in the first orientation.

As can also be seen in Figure 8, the first terminal ring 98 and the second terminal ring 100, when viewed from the first side with the first spring end 82 positioned vertically above the second spring end 84, extend horizontally from left to right, and the first terminal ring 98 is interconnected with an uppermost one of the sinusoidal ring sections 102, and the second terminal ring 100 is interconnected with a lowermost one of the sinusoidal ring sections 102. In particular, in the embodiment shown, the uppermost one of the sinusoidal ring sections 102 is in the first orientation and the first terminal ring 98 is interconnected with the inner left peak 108 and the outer right peak 112 of the uppermost one of the sinusoidal ring sections 102, and the lowermost one of the sinusoidal ring sections 102 is in the second orientation and the second terminal ring 100 is interconnected with the inner left trough 116 and the outer right trough 120 of the lowermost one of the sinusoidal ring sections 102.

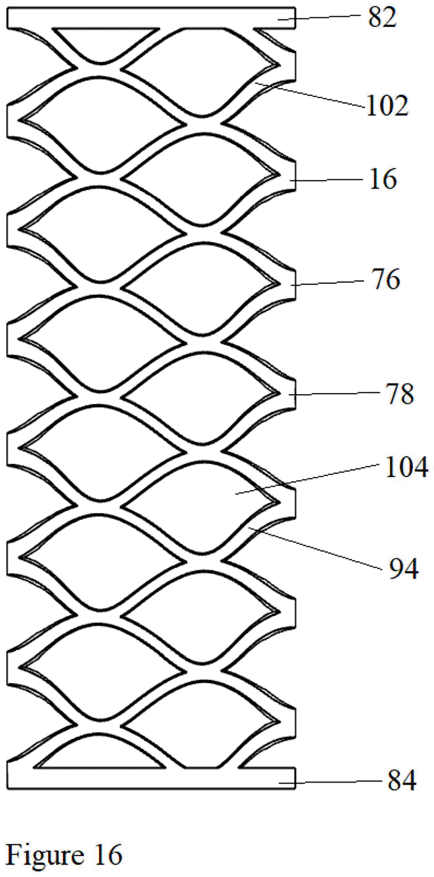

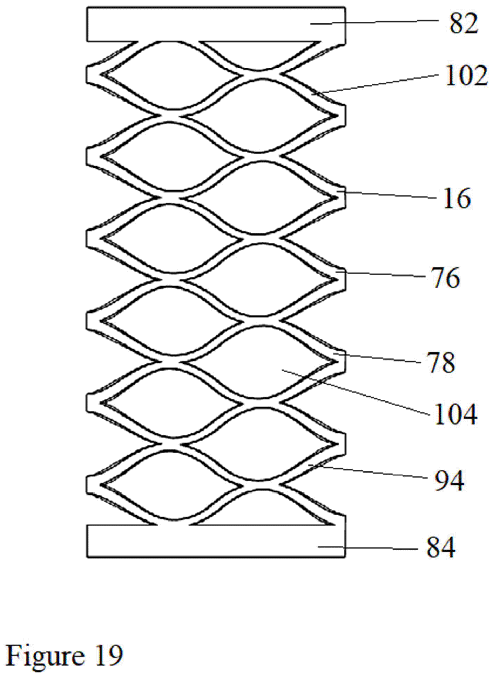

The spring body 76 is resiliently compressible from the unbiased condition shown in Figure 8 to the compressed condition shown in Figure 19. The spring body 76 can also be partially compressed from the unbiased condition shown in Figure 8 to the pre-loaded condition shown in Figure 16. The spring body 76 is biased to return from the compressed condition towards the unbiased condition.

Each of the sinusoidal ring sections 102 has an amplitude that is defined by the distance between the peaks 108, 112, 114, 118 and troughs 106, 110, 116, 120. As can be seen by comparing Figures 8, 16, and 19, the amplitude of the sinusoidal ring sections 102 decreases as the spring body 76 is compressed.

As can be seen in Figure 11, when the fluid pump 10 is assembled, the spring 16 extends between the piston chamber forming body 14 and the piston element 12. In particular, the first spring end 82 engages with the spring engagement surface 38 of the piston chamber forming body 14 and the second spring end 84 engages with the spring engaging surface 72 of the piston element 12. The cylindrical inner wall 30 of the piston chamber forming body 14 and the liquid piston 46 of the piston element 12 also extend into the hollow internal cavity 80 of the spring 16.

A method of operating the fluid pump 10 will now be described with reference to Figures 1 to 19. The fluid pump 10 is initially assembled in the unloaded state shown in Figures 1 and 11, with the locking projections 24 of the piston chamber forming body 14 positioned in the unloaded zone 54 of the locking channels 52 of the piston element 12. When the fluid pump 10 is in the unloaded state, the spring engagement surface 38 of the piston chamber forming body 14 is spaced far enough from the spring engaging surface 72 of the piston element 12 for the spring 16 to remain in the unbiased condition.

The fluid pump 10 can remain in the unloaded state when being shipped and/or stored, which can help to prevent compression set of the plastic spring 16.

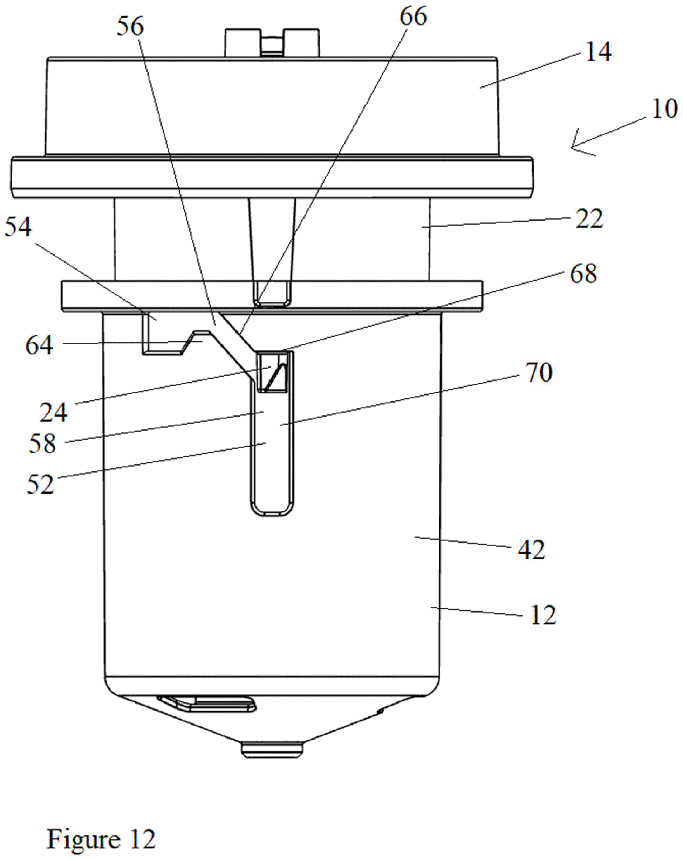

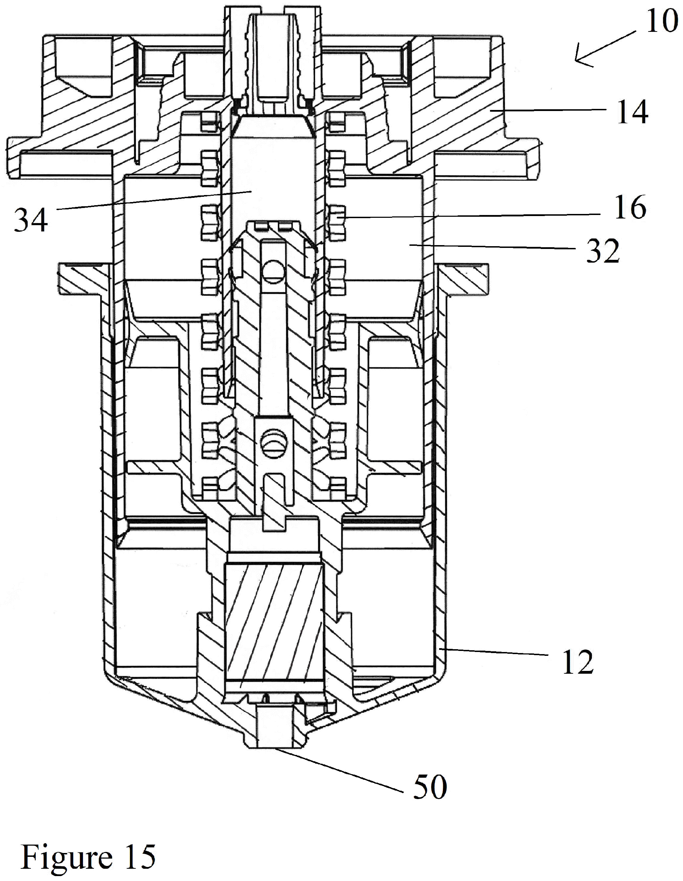

When the fluid pump 10 is ready to be used, the piston element 12 is moved relative to the piston chamber forming body 14 from the unloaded state shown in Figures 1 and 11 to the pre-loaded state shown in Figures 12 and 15. To move to the pre-loaded state, the piston element 12 is rotated relative to the piston chamber forming body 14, so that the cam surfaces 26 of the locking projections 24 are brought into engagement with the stop members 64 in the intermediate zone 56. When a sufficient unlocking force is applied, the cam surfaces 26 bend the stop members 64 outwardly from the first position shown in Figure 13 to the second position shown in Figure 14. With the stop members 64 in the second position shown in Figure 14, the locking projections 24 are able to move past the stop members 64 towards the pre-loaded zone 58. The stop members 64 then snap back into the unbiased first position.

As the locking projections 24 move laterally towards the pre-loaded zone 58, the locking projections 24 come into contact with the transition surface 66, which forces the piston element 12 to move axially inwards relative to the piston chamber forming body 14. The movement of the piston element 12 axially inwards relative to the piston chamber forming body 14 compresses the spring 16 from the unbiased condition towards the pre-loaded condition.

When the locking projections 24 reach the pre-loaded zone 58, the spring 16 is in the pre-loaded condition and the bias of the spring 16 holds the locking projections 24 in engagement with the pre-load surfaces 68. With the fluid pump 10 in the pre-loaded state, the fluid pump 10 is now ready to be used to dispense fluid.

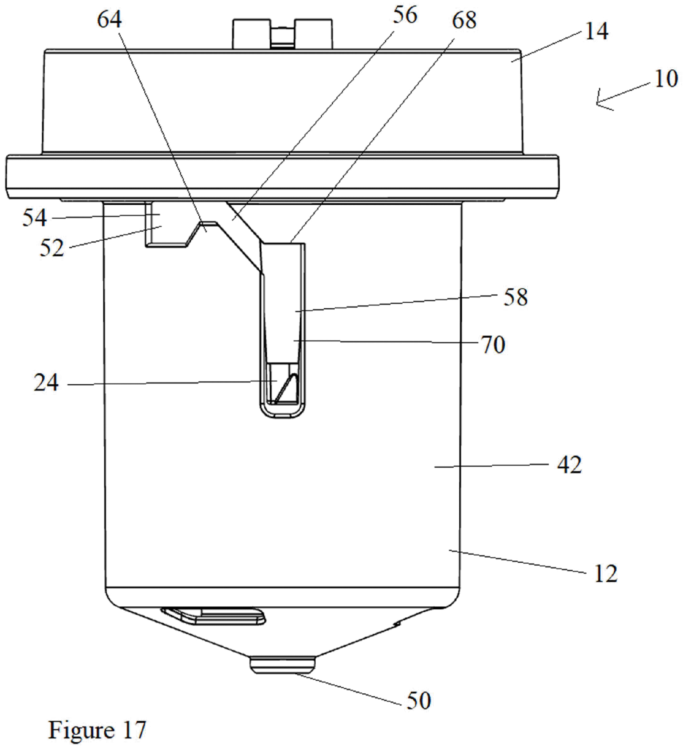

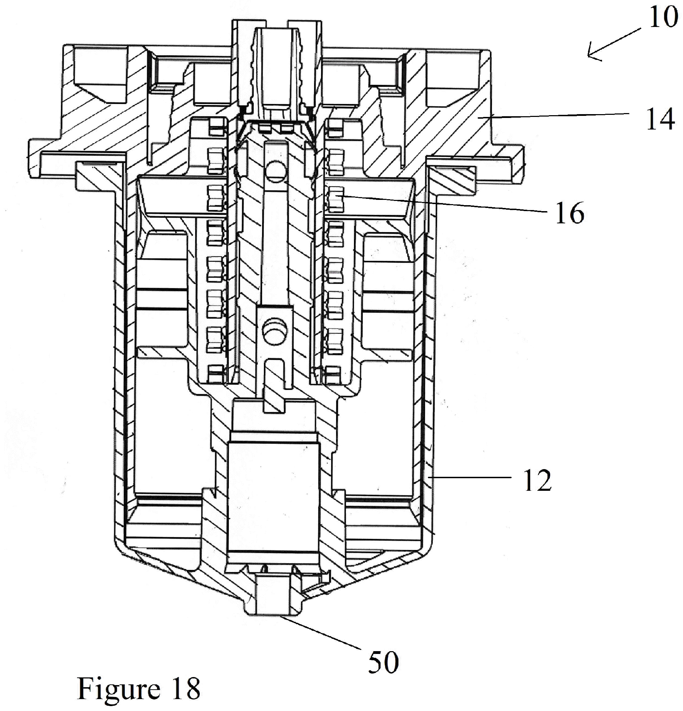

To dispense fluid from the fluid pump 10, an activation force is applied to the piston element 12 to move the piston element 12 axially inwards relative to the piston chamber forming body 14 from the pre-loaded state shown in Figures 12 and 15 to the retracted state shown in Figures 17 and 18. As the piston element 12 moves axially inwards relative to the piston chamber forming body 14, the locking projections 24 move away from the pre-load surfaces 68 through the activation passages 70. The movement of the piston element 12 relative to the piston chamber forming body 14 from the pre-loaded state to the retracted state causes foam to be generated and dispensed from the discharge outlet 50 in a manner as is known in the art.

When the fluid pump 10 is in the retracted state shown in Figures 17 and 18, the spring 16 is in the compressed condition. Upon release of the activation force, the bias of the spring 16 returns the fluid pump 10 from the retracted state back to the pre-loaded state. The movement of the piston element 12 from the retracted state to the pre-loaded state causes liquid to be drawn into the liquid cavity 34 from the fluid reservoir, and air to be drawn into the air cavity 32 from the discharge outlet 50 in a manner as is known in the art.

Once the fluid reservoir is empty, the fluid pump 10 can be removed from the dispenser housing and is preferably recycled.

The spring 16 can advantageously be made from relatively inexpensive materials, such as polypropylene, polyethylene, high density polyethylene, and/or low density polyethylene, which are compatible for recycling together with the rest of the fluid pump 10. Maintaining the spring 16 in the unbiased condition during shipping and storage furthermore preferably helps to avoid or minimize compression set of the spring 16. The spring 16 is also easy to mold and easy to feed into the fluid pump 10, and unlike a metal coil spring, will not tend to nest or coil into each other. The spring 16 can also advantageously be used to retrofit pumps 10 that previously used metal coil springs.

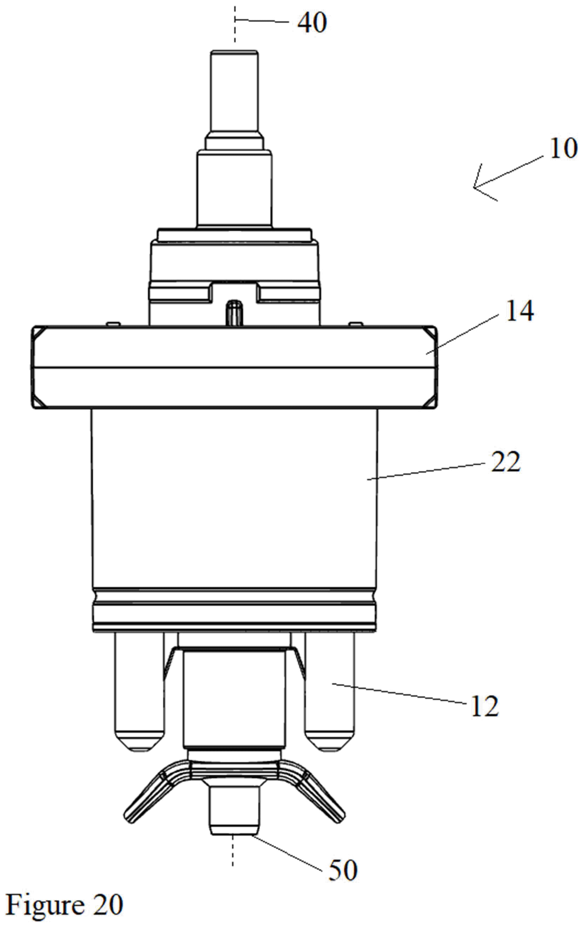

Reference is now made to Figures 20 to 28, which show a fluid pump 10 in accordance with a second embodiment of the present invention. Like numerals are used to denote like components.

As in the previous embodiment, the fluid pump 10 shown in Figures 20 to 28 includes a piston element 12, a piston chamber forming body 14, and a spring 16. The spring 16 shown in Figures 20 to 28 is identical to the spring 16 shown in Figures 1 to 19.

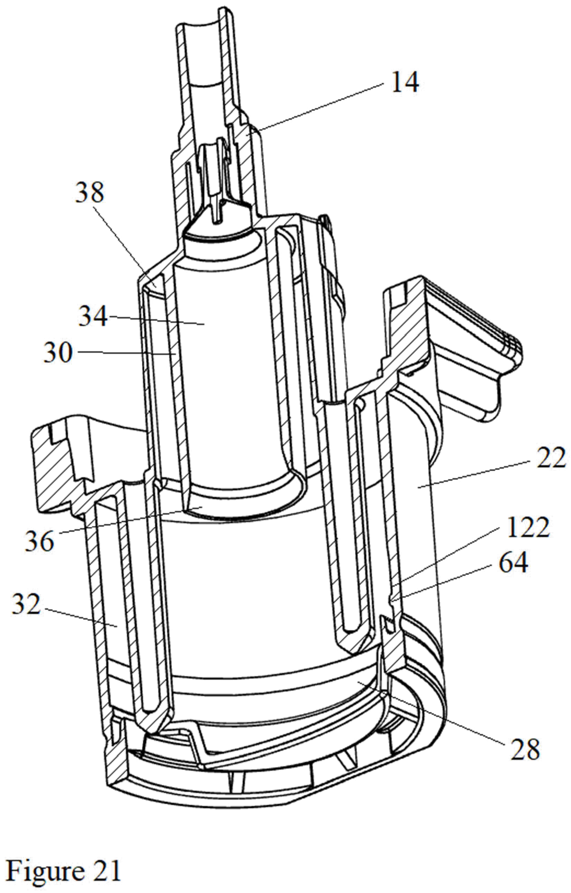

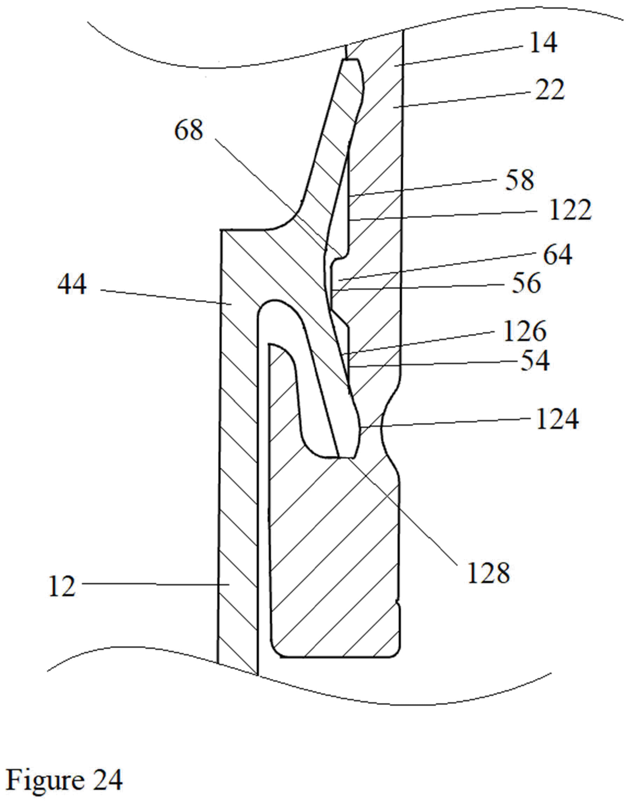

As can be seen in Figure 21, the piston chamber forming body 14 includes a cylindrical outer wall 22 that defines an air cavity 32 and a cylindrical inner wall 30 that defines a liquid cavity. As can be seen in Figure 24, the outer wall 22 has a stop member 64 in the form of a ring that projects inwardly from an inner surface 122 of the outer wall 22. The stop member 64 has an upwardly facing pre-load surface 68. The inner surface 122 has an unloaded zone 54 located below the stop member 64, an intermediate zone 56 located at the stop member 64, and a pre-loaded zone located above the stop member 64.

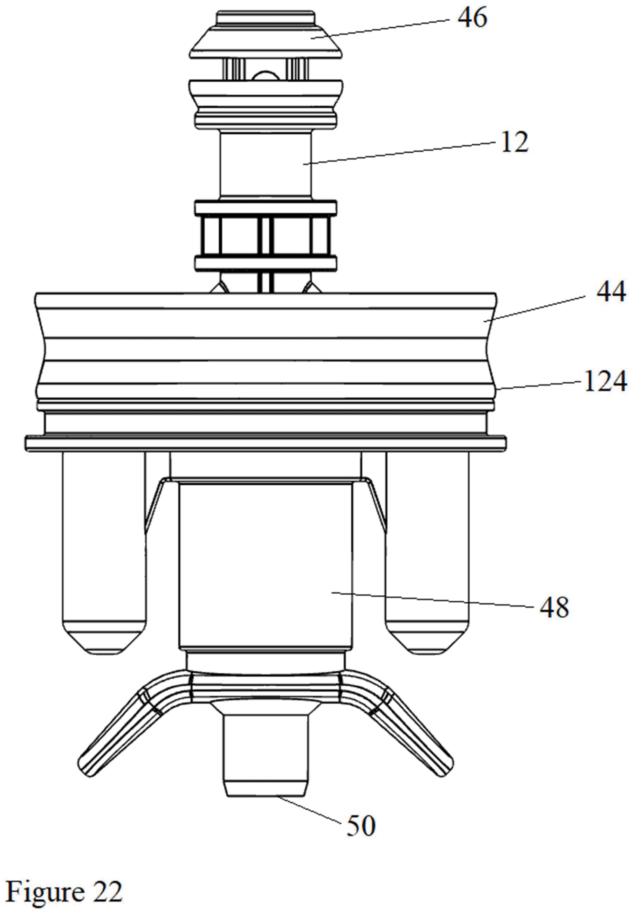

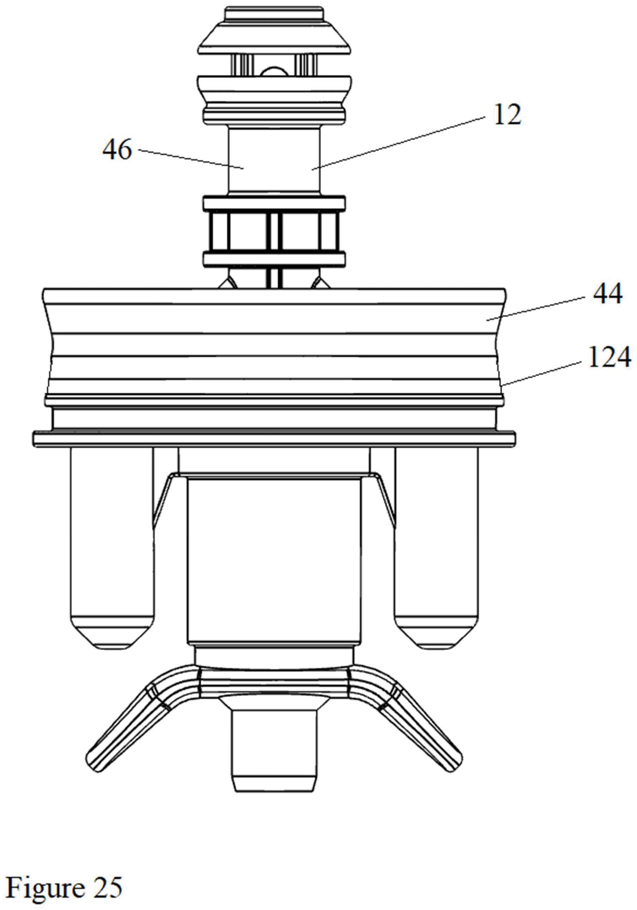

As can be seen in Figure 22, the piston element 12 has an air piston 44, a liquid piston 46, a foam generating chamber 48, and a discharge outlet 50. The air piston 44 includes a sealing body 124 that is configured to engage with the inner surface 122 of the outer wall 22 of the piston chamber forming body 14. As can be seen in Figure 24, the sealing body 124 has a sloped surface 126 that faces upwardly and outwardly, and a stop surface 128 that faces downwardly. The sealing body 124 is resiliently deformable from the first position shown in Figure 22 to the second position shown in Figure 25.

As in the previous embodiment, the spring 16 extends between a spring engagement surface 38 of the piston chamber forming body 14 and a spring engaging surface 72 of the piston element 12.

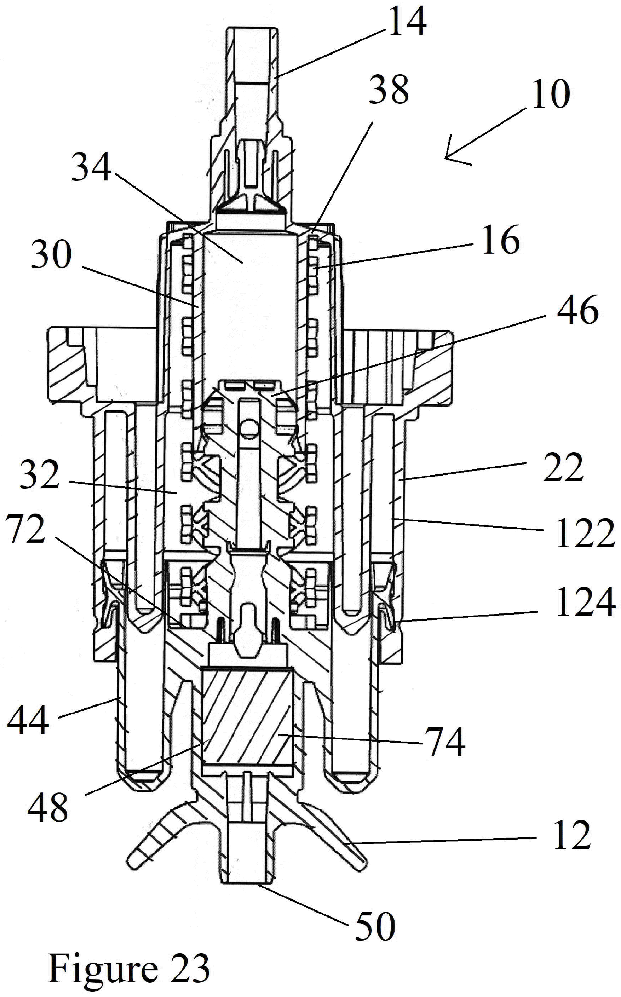

A method of using the fluid pump 10 will now be described with reference to Figures 20 to 28. The fluid pump 10 is initially assembled in the unloaded state shown in Figures 20 and 23. When in the unloaded state, the sealing body 124 is positioned below the stop member 64 in the unloaded zone 54, as can be seen in Figure 24. When the fluid pump 10 is in the unloaded state, the spring engagement surface 38 of the piston chamber forming body 14 is spaced far enough from the spring engaging surface 72 of the piston element 12 for the spring 16 to remain in the unbiased condition. As in the previous embodiment, the fluid pump 10 can be shipped and/or stored in the unloaded state.

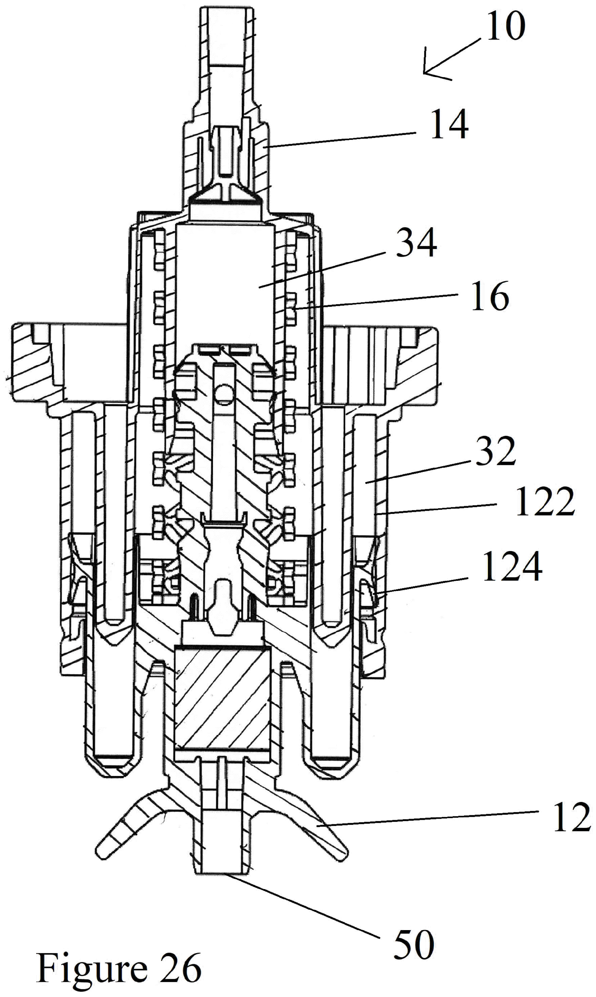

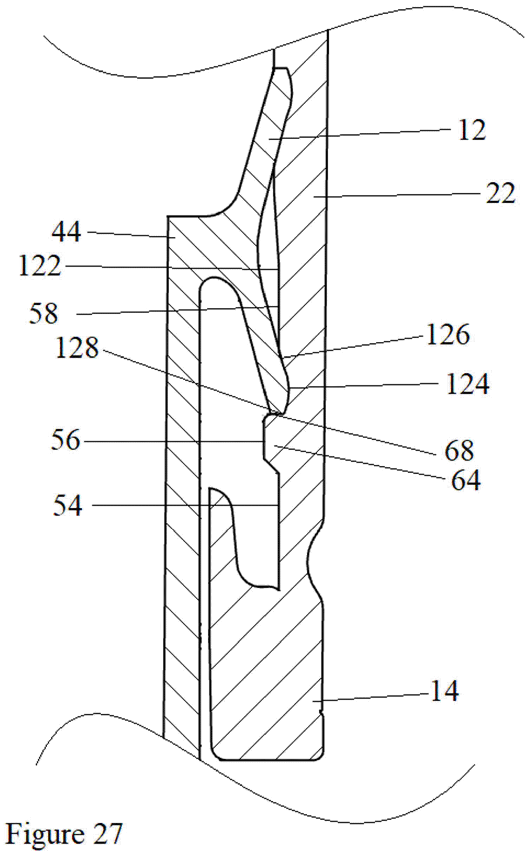

When the fluid pump 10 is ready to be used, the piston element 12 is moved relative to the piston chamber forming body 14 from the unloaded state shown in Figures 20 and 23 to the pre-loaded state shown in Figures 26 and 27. To move to the pre-loaded state, the piston element 12 is pushed upwardly relative to the piston chamber forming body 14, which brings the sloped surface 126 of the sealing body 124 into engagement with the stop member 64. If a sufficient upwards force is applied to the piston element 12, the engagement of the stop member 64 with the sloped surface 126 deforms the sealing body 124 from the first position shown in Figure 22 to the second position shown in Figure 25, which allows the sealing body 124 to move past the stop member 64 to the pre-loaded state shown in Figure 27. The sealing body 124 then snaps back to the unbiased first position.

When the fluid pump 10 is in the pre-loaded state, the spring 16 is compressed to the pre-loaded condition, and the bias of the spring 16 pushes the stop surface 128 of the sealing body 124 into engagement with the pre-load surface 68 of the stop member 64.

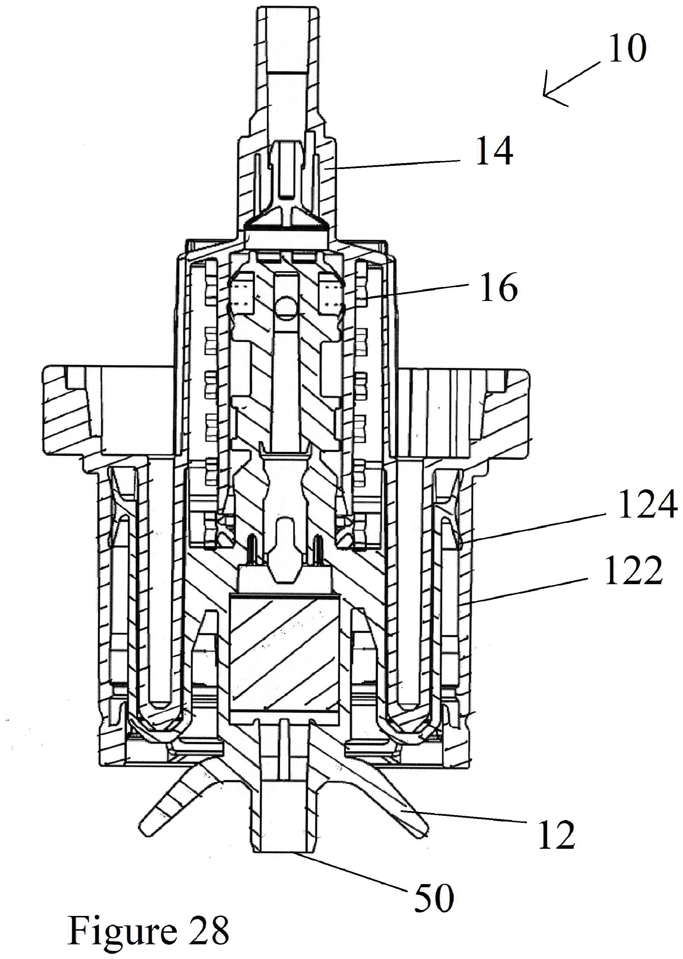

To dispense fluid from the fluid pump 10, an activation force is applied to the piston element 12 to move the piston element 12 further axially inwards relative to the piston chamber forming body 14 from the pre-loaded state shown in Figures 26 and 27 to the retracted state shown in Figure 28. As in the previous embodiment, movement of the piston element 12 relative to the piston chamber forming body 14 from the pre-loaded state to the retracted state causes foam to be generated and dispensed from the discharge outlet 50 in a manner as is known in the art. When the fluid pump 10 is in the retracted state, the spring 16 is in the compressed condition.

When the activation force is released, the bias of the spring 16 returns the fluid pump 10 to the pre-loaded state. As in the previous embodiment, movement of the piston element 12 from the retracted state to the pre-loaded state causes liquid to be drawn into the liquid cavity 34 from a fluid reservoir, and air to be drawn into the air cavity 32 from the discharge outlet 50 in a manner as is known in the art.

It will be understood that, although various features of the invention have been described with respect to one or another of the embodiments of the invention, the various features and embodiments of the invention may be combined or used in conjunction with other features and embodiments of the invention as described and illustrated herein.

The invention is not limited to the particular structures of the preferred embodiments that have been shown in the drawings. Rather, any functionally equivalent structures could be used.

Although the fluid pumps 10 shown in the preferred embodiments use a particular preferred spring construction, it is to be understood that any other suitable spring construction could be used instead. Likewise, although the spring 16 has been described in the preferred embodiments as being used in a hand cleaning fluid pump 10, the spring 16 could also be used for any other suitable application.

Although the preferred embodiments have shown fluid pumps 10 used for dispensing foam, this is not necessary. The pumps 10 could be adapted for any desired purpose, including for dispensing liquids, foams, emulsions, and/or gels.

The invention is not limited to the specific embodiment of the spring 16 shown in the drawings. For example, in some embodiments of the invention the spring 16 could have a different number of sinusoidal ring sections 102 than is shown in the drawings, and/or the spring 16 could have different dimensions from those shown in the drawings.

Although the spring 16 has been described in the preferred embodiments as being made from polypropylene, polyethylene, high density polyethylene, and/or low density polyethylene, the spring 16 could alternatively be made from any other suitable material or materials.

Although the drawings have shown an embodiment of the fluid pump 10 having two locking projections 24 and two locking channels 52, this is not necessary. In alternative embodiments, the fluid pump 10 could have fewer locking projections 24 and locking channels 52 or additional locking projections 24 and locking channels 52.

Although this disclosure has described and illustrated certain preferred embodiments of the invention, it is to be understood that the invention is not restricted to these particular embodiments. Rather, the invention includes all embodiments which are functional or mechanical equivalents of the specific embodiments and features that have been described and illustrated herein.

## Claims

1. A spring (16) comprising:
a resiliently deformable spring body (76) that extends from a first spring end (82) to a second spring end (84);
wherein the spring body (76) has a hollow cylindrical shape with an outer cylindrical member (78) that surrounds and defines a hollow internal cavity (80);
wherein the outer cylindrical member (78) extends about a central axis (92) from the first spring end (82) to the second spring end (84);
wherein the hollow internal cavity (80) extends from a first end opening (86) at the first spring end (82) to a second end opening (88) at the second spring end (84);
wherein the spring body (76) has a plane of symmetry (90) that contains the central axis (92) and divides the spring body (76) into a first side (94) and a second side (96), the first side (94) being a mirror image of the second side (96);
wherein the outer cylindrical member (78) comprises a stack of interconnected sinusoidal ring sections (102) with side openings (104) defined therebetween;
wherein each of the sinusoidal ring sections (102) have a sinusoidal shape when viewed from the first side (94);
wherein each of the sinusoidal ring sections (102) are arranged in either a first orientation or a second orientation;
wherein the sinusoidal ring sections (102) are stacked in an alternating pattern of the first orientation and the second orientation;
wherein the sinusoidal ring sections (102) that are in the first orientation, when viewed from the first side (94) with the first spring end (82) positioned vertically above the second spring end (84), extend, from left to right, from an outer left trough (106) to an inner left peak (108) to an inner right trough (110) to an outer right peak (112);
wherein the sinusoidal ring sections (102) that are in the second orientation, when viewed from the first side (94) with the first spring end (82) positioned vertically above the second spring end (84), extend, from left to right, from an outer left peak (114) to an inner left trough (116) to an inner right peak (118) to an outer right trough (120);
wherein, for each sinusoidal ring section (102) that is in the first orientation and is spaced from the first spring end (82) and the second spring end (84), the outer left trough (106) is interconnected with the outer left peak (114) of an underlying one of the sinusoidal ring sections (102) in the second orientation, the inner left peak (108) is interconnected with the inner left trough (116) of an overlying one of the sinusoidal ring sections (102) in the second orientation, the inner right trough (110) is interconnected with the inner right peak (118) of the underlying one of the sinusoidal ring sections (102) in the second orientation, and the outer right peak (112) is interconnected with the outer right trough (120) of the overlying one of the sinusoidal ring sections (102) in the second orientation;
wherein, for each sinusoidal ring section (102) that is in the second orientation and is spaced from the first spring end (82) and the second spring end (84), the outer left peak (114) is interconnected with the outer left trough (106) of an overlying one of the sinusoidal ring sections (102) in the first orientation, the inner left trough (116) is interconnected with the inner left peak (108) of an underlying one of the sinusoidal ring sections (102) in the first orientation, the inner right peak (118) is interconnected with the inner right trough (110) of the overlying one of the sinusoidal ring sections (102) in the first orientation, and the outer right trough (120) is interconnected with the outer right peak (112) of the underlying one of the sinusoidal ring sections (102) in the first orientation;
wherein the spring body (76) is compressible from an unbiased condition, in which the first spring end (82) is spaced a first distance from the second spring end (84) along the central axis (92), to a compressed condition, in which the first spring end (82) is spaced a second distance from the second spring end (84) along the central axis (92), the first distance being greater than the second distance; and
wherein the spring body (76) is biased to return from the compressed condition towards the unbiased condition.

2. The spring (16) according to claim 1, wherein the spring body (76) is formed from plastic.

3. The spring (16) according to claim 1, wherein the spring body (76) is formed from polypropylene.

4. The spring (16) according to claim 1, wherein the spring body (76) is formed from polyethylene.

5. The spring (16) according to claim **1,** wherein the spring body (76) is formed from high density polyethylene.

6. The spring (16) according to claim **1,** wherein the spring body (76) is formed from low density polyethylene.

7. The spring (16) according to any one of claims 1 to 6, wherein the outer cylindrical member (78) further comprises a first terminal ring (98) at the first spring end (82) and a second terminal ring (100) at the second spring end (84);
wherein the first terminal ring (98) defines the first end opening (86); and
wherein the second terminal ring (100) defines the second end opening (88).

8. The spring (16) according to claim 7, wherein the first terminal ring (98) and the second terminal ring (100), when viewed from the first side (94) with the first spring end (82) positioned vertically above the second spring end (84), extend horizontally from left to right.

9. The spring (16) according to claim 8, wherein, when viewed from the first side (94) with the first spring end (82) positioned vertically above the second spring end (84), the first terminal ring (98) is interconnected with an uppermost one of the sinusoidal ring sections (102), and the second terminal ring (100) is interconnected with a lowermost one of the sinusoidal ring sections (102).

10. The spring (16) according to claim 9, wherein, when viewed from the first side (94) with the first spring end (82) positioned vertically above the second spring end (84), the uppermost one of the sinusoidal ring sections (102) is in the first orientation, and the first terminal ring (98) is interconnected with the inner left peak (108) and the outer right peak (112) of the uppermost one of the sinusoidal ring sections (102).

11. The spring (16) according to claim 9, wherein, when viewed from the first side (94) with the first spring end (82) positioned vertically above the second spring end (84), the uppermost one of the sinusoidal ring sections (102) is in the second orientation, and the first terminal ring (98) is interconnected with the outer left peak (114) and the inner right peak (118) of the uppermost one of the sinusoidal ring sections (102).

12. The spring (16) according to any one of claims 9 to 11, wherein, when viewed from the first side (94) with the first spring end (82) positioned vertically above the second spring end (84), the lowermost one of the sinusoidal ring sections (102) is in the first orientation, and the second terminal ring (100) is interconnected with the outer left trough (106) and the inner right trough (110) of the lowermost one of the sinusoidal ring sections (102).

13. The spring (16) according to any one of claims 9 to 11, wherein, when viewed from the first side (94) with the first spring end (82) positioned vertically above the second spring end (84), the lowermost one of the sinusoidal ring sections (102) is in the second orientation, and the second terminal ring (100) is interconnected with the inner left trough (116) and the outer right trough (120) of the lowermost one of the sinusoidal ring sections (102).

14. The spring (16) according to any one of claims 1 to 13, wherein, when the spring body (76) is in the unbiased condition, the sinusoidal ring sections (102) have a first amplitude;
wherein, when the spring body (76) is in the compressed condition, the sinusoidal ring sections (102) have a second amplitude; and
wherein the first amplitude is greater than the second amplitude.

15. The spring (16) according to any one of claims 1 to 14, wherein the spring (16) is for biasing a piston element (12) towards an extended position relative to a piston chamber forming body (14) in a fluid pump (10).
